Europäisches Patentamt

European Patent Office

Office européen des brevets

(11) Publication number: **0 290 400**
**A1**

## (12) EUROPEAN PATENT APPLICATION

(21) Application number: **88830142.1**

(22) Date of filing: **30.03.88**

(51) Int. Cl.⁴: **F 16 H 15/22**

(30) Priority: **03.04.87 IT 4682587**

(43) Date of publication of application:
**09.11.88 Bulletin 88/45**

(84) Designated Contracting States: **DE ES FR GB**

(71) Applicant: **Pagliani, Ivo**
**Via Marchesi 13**
**I-41043 Formigine (MO) (IT)**

(72) Inventor: **Pagliani, Ivo**
**Via Marchesi 13**
**I-41043 Formigine (MO) (IT)**

(54) **Sepless seed change gear.**

(57) Stepless speed change gear, comprising two coaxial shafts (10) and (39), one (10) at the driving entry and the other (39) at the driving end, then a peripheral set of equally spaced cone-shaped disks (20), whose internal sections are clamped between two opposed dragging ring bodies (18, 19) associated to the above mentioned driving entry shaft (10). Two opposed ring tracks (33, 34) are keyed on the driving exit shaft (39), and clamped on the external sections of the disks (20), from which they collect the movement, while the axes (21) of such disks (20) are rotatory installed, and slidingly received, in transversal stop seats (24) and (25) foreseen on two coaxial adjustment members (12) and (23). Changing the mutual angle position of these two members (12) and (23) the disks (20) radial position is adjusted, and therefore even the driving exit shaft (39) revolution number.

FIG.1

## Description

## STEPLESS SPEED CHANGE GEAR

More precisely, the finding refers to a stepless speed change gear of the type in which the cinematic connection between the driving entry shaft and the driving exit shaft is carried out by a peripheral set of equally spaced cone-shaped disks, commonly said satellites. Stepless speed change gears are generally known whose driving entry and exit shafts are coaxial, and where the above said peripheral set of cone-shaped disks is placed concentrically to these shafts by a spider keyed on the driving exit shaft. Furthermore the internal sections of such disks are clamped between two internal dragging ring bodies associated to the driving entry shaft, while the external sections of the same disks are clamped between two external stationary ring bodies, to which a speed selection and adjustment device is associated. The internal ring bodies clamping on these disk internal sections is carried out by suitable elastic means, and the disk axes are received in the relevant radial seats foreseen on the spider. During the working of such known speed gears the disks are subjected to two rotary movements, a rotation one around their own axes (due to the disk engagement with the ring bodies clamped to the driving entry shaft), and a revolution one around the common axis of such driving entry and exit shafts (due to the disk engagement with the external ring bodies, that are stationary). Basically the said revolution movement causes the dragging of the spider, and therefore of the exit shaft, whose rotation speed depends on the disk insertion degree between the said ring bodies pairs. In order to change the exit speed, the above mentioned adjustment device has been foreseen, comprising two opposed ring cams equipped with conjugate sloped planes, between which a ball crown is interposed. One of such cams is fixed to the speed gear casing, while the other is obtained on one of such external ring bodies that, by means of a screw-nut thread device, can be angularly adjusted with respect to the other external ring body.

Thanks to the above mentioned means, by changing the mutual angle position of these two external ring bodies, the distance between the latter is increasingly or decreasingly changed, and therefore their insertion degree between the cone-shaped disks.

In other words, when the distance between the external ring bodies increases or decreases, the cone-shaped disks are radially shifted and therefore the distance between the internal ring bodies correspondingly increases or decreases.

In this way the gear ratio can be changed, and therefore the exit speed, too.

But the increasing use of such stepless speed change gears has pointed out the following inconveniences.

A first inconvenient is that such known change gears are not able to keep the set r.p.m. steady in the time, and this occurs even when the resistant load is subjected to very small variations. As a matter of fact, as the disk axes are slidingly received in radial seats obtained on the spider, when the change gear working conditions are modified these axes tend to slide with respect to these seats, so that the disk insertion degree between such ring bodies pairs tend to change, and the exit shaft revolution number is not steady.

Furthermore, other inconveniences of such known change gears originate from the system or way in which the gear ratio adjustment is carried out. In particular, these inconveniences are pointed out when the change gear is adjusted in such a way that it nears the two external ring bodies, and above all when this specific adjustment is carried out, as already occurred, when the change gear is stationary. As such nearing is carried out by the two above mentioned ring cams, they indeed work on the external ring bodies with a strength that is orthogonal both to their lying plane and to the disk lying plane. Furthermore, as the taper of the latter is small, in order to obtain a strength component sufficient to shift the disks radially towards the inside, the ring bodies need to be clamped on the disks with a particularly high strength. In practice what occurs is that this strength is released on very small surfaces, so that there are local deformations both on the disks and on the external ring bodies. These deformation causes in their turn the damaging of the disk and both internal and external ring body active surfaces, increase the change gear working noise, cause vibrations in the same, and the exit revolution control/adjustment results extremely difficult.

The main purpose of this finding is that of making available a stepless speed change gear able to solve the mentioned inconveniences thanks to a simple and rational design solution.

According to the invention, the change gear comprises a driving entry shaft, a driving exit shaft aligned to the previous one, a peripheral set of equally spaced cone-shaped disks concentrically placed to the above two shafts, and a opposed internal ring bodies pair, dragged by such driving entry shaft, and elastically clamped on the internal sections of such disks, and foresees that the disk external sections are clamped between two external ring tracks, collecting the driving, that are keyed on the exit shaft so as to rotate with it, under command of the cone-shaped disks. The latter show their own axes rotatingly installed on stop means adjustable from outside, and fit for selecting the disk axes radial position, and are made rotate around themselves by the mentioned ring bodies pair, and drag in rotation the two external ring tracks.

In particular such stop means comprise two disk-shaped members, one fixed and the other idle installed in comparison to the first, equipped with respective set of transversal seats in which they are slidingly received, and rotatingly installed, the disk axes. These two sets of transversal seats are crossed between them in such a way that, changing the rotating disk-shaped member angle position, the disk radial position is correspondingly modified, and therefore even the gear ratio.

Thanks to the presence of such crossed transversal seats, it is immediately evident that, once selected a certain r.p.m., it can not be subjected to any variation, as the disk axes are prevented to perform any movement, with the exception of the rotation one.

Furthermore the same crossed transversal seats allow to select the wished gear ratio without the risk of damaging the finding active surfaces, as the disks themselves cause the track and ring body moving away and not vice versa as in the previous technique.

The finding features and constructive benefits will be better explained during the detailed description that follows, carried out with reference to the enclosed drawing showing, only as a non-limiting example, a particular and preferred embodiment form.

The FIG. 1 shows the finding according to a sectional side overhanging view.

The FIG. 2 shows the same according to a frontal view from the driving entry side, with the exclusion of the motor group fixing element.

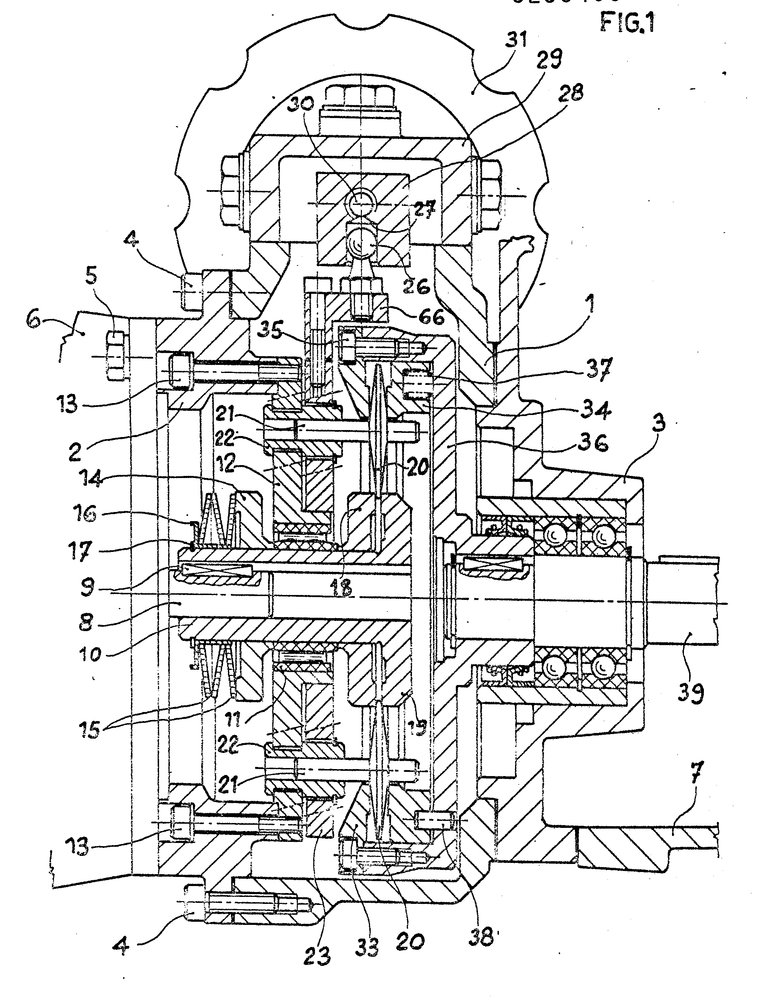

From the above mentioned drawings, in particular see the FIG. 1, it can be noted a casing (1), equipped with an extremity crown (2) and a opposed cover (3). The crown (2) is fixed to the casing (1) by means of the screws indicated with (4), and on the same crown (2), by means of the screws (5), a suitable motor group (6), such as an electric motor, is to be fixed. The cover (3), too, is locked on the casing (1) by means of screws, not to be seen in the drawing, and at the basis of the same cover (3) there is a plate (7) for the finding fixing to a suitable support.

The exit motor shaft (8) from such motor group (6), see again the FIG. 1, is keyed, by means of a spline (9) to an entry driving shaft hollow shaft (10). This latter is idle installed, with interposition of a roller bearing (11) in the center of a disk-shaped body (12), that is peripherally fixed to the above mentioned crown (2) by suitable screws (13).

On one end of such shaft (10), more precisely on the side facing the motor group (6), a pushing ring (14), a Belleville washer pack (15) and a supporting bush (16) for the latter are strung, and everything is contained by a snap ring (17) (see FIG. 1). The pushing ring (14) lays against the internal bearing ring (11), and this internal ring in its turn works against a ring body (18), rotatingly installed on the other end of the shaft (10).

Such ring body (18) is placed in front of a second ring body (19), composed of a flange enclosed to such shaft (10), and between the two ring bodies (18) and (19) the internal sections of equally spaced cone-shaped disk peripheral set (20) are received. In the shown embodiment four disks are foreseen (20), whose faces are composed by two truncated cone-shaped convex surfaces having the vertexes opposed and with the same angle vertex. The latter is basically of 180°, as well shown in the FIG. 1.

Each single disk (20) shows an axis (21) idle installed inside a bushing (22), and can axially slide in the latter. The bushing (22) is axially locked with respect to the above mentioned disk-shaped body

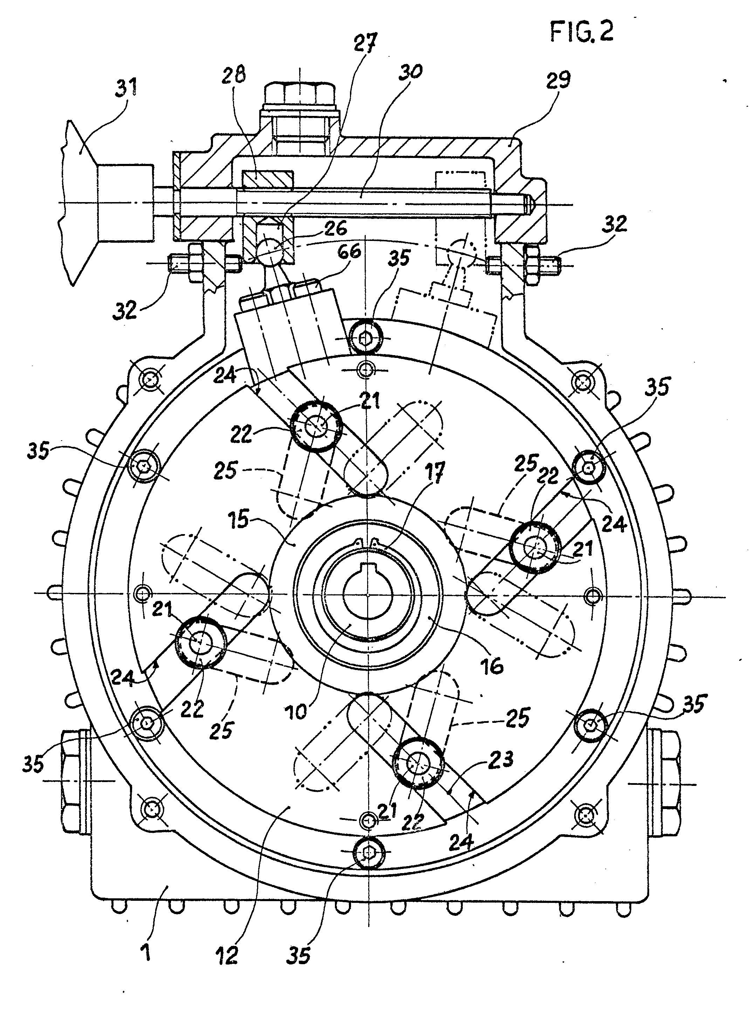

(12) and to a crown (23), idle installed on the latter (see FIG. 1). As well shown in the FIG. 2, each bushing (22) is slidingly received in a cut (24) obtained on the disk-shaped body (12), and in a slotted opening (25) obtained on the crown (23). In particular the cuts (24) have a rectilinear axis and flow on the cylindrical surface of the disk-shaped body (12), and are oriented in a concordant way forming the same angle with the radiuses passing through their origin. In the same way the openings (25), too, have a rectilinear axis, and are oriented in the opposite direction to that of the cuts (24).

Changing the mutual angle position of the elements (12) and (23) the radial position of the bushings (22), and therefore of the disks (20) can be adjusted. This is obtained by shifting peripherally the ball head (26) that is fixed to the crown (23) in (66), and is received in a seat (27) of a block (28) foreseen at the casing (1) top. The block (28) is placed in a small cover (29) where even a threaded bar (30) is received, plugged to the said block (28), and extended towards the outside where there is an adjustment knob (31).

Furthermore, the block (28) limit switches are set by two adjustable threaded caps (32), clearly shown in the FIG. 2.

From the FIG. 1 it can be noted that the disk (20) external sections are clamped between two driving collection tracks, composed of rings respectively indicated by (33) and (34).

The first ring (33) is fixed by screws (35) on the mouth of a cup element (36), while the second ring (34) is placed in the hollow of the latter. The ring (34) can slide axially with respect to the element (36), against which is supported with interposition of a equally spaced compression spring peripheral set (37), placed in the corresponding seats obtained on the ring (34). As a matter of fact, the latter is locked torsionally, but not axially, with respect to the element (36) by means of a pin (38) (see FIG. 1).

As a conclusion, the element (36) is keyed on the driving exit shaft (39) coaxially placed to the entry shaft (10). Such exit shaft (39) is extended outside the cover (3), where it shows suitable means for its connection to the device or equipment to be operated. Obviously in the casing (1) there is a suitable oil bath, whose containing is carried out by suitable gaskets, as those that can be noticed on the FIG. 1 on the right.

The finding works as follows.

When the motor axis (8) rotates, in any direction, it drags the entry shaft (10) and the ring bodies (18) and (19), that in their turn rotate the disks (20) in the opposite direction to that of the shaft (10). The disks (20). externally engaged with the driving collection tracks (33) and (34), rotate on their turn the element (36), and therefore the exit shaft (39) in the same rotation direction of the disks (20).

It is clear that, during these operations, the shafts (21) of the disks (20) rotates around themselves, but they result stationary in comparison to the shafts (10) and (39), as their radial position is set by the crossed seats (24) and (25) foreseen on the disk-shaped body (12) and on the crown (23) respectively.

Thanks to these means the selected gear ratio, and the corresponding exit speed, remain steady, and can be adjusted only by the device (**30, 28**). The sliding, indeed, in one or another direction, of the block (**28**) causes the crown (**23**) rotation with respect to the disk-shaped body (**12**), and therefore the radial sliding of the bushings (**22**). This sliding strings or unstrings the disks (**20**) between the driving collecting tracks (**33**) and (**34**), and disinserts or inserts the disks (**20**) between the ring bodies (**18**) and (**19**). At this point it is useful to point out that the stress for the disks (**20**) radial sliding takes place parallelly to their lying plane, and therefore according to an optimal direction to cause the tracks (**33, 34**) or ring bodies (**18, 19**) simultaneous enlargement in contrast with the corresponding elastic means (**37**) or (**15**).

This allows to change the gear ratio without any damaging risk.

Finally, the performed tests have shown that this change gear . has a particularly silent working.

Obviously the invention is not limited to the single shown and described invention, but includes all the technical equivalents of the mentioned means, as well as all their combinations, if carried out according to the following

## Claims

**1.** Stepless speed change gear, of the type comprising a driving entry shaft (**10**), a driving exit shaft (**39**) aligned with the previous one, and an equally shaped cone-shaped disk peripheral set (**20**), whose internal sections are clamped between a pair of opposite ring bodies (**18, 19**), enclosed in the said driving entry shaft (**10**), characterized by the fact of comprising:
- two opposite ring tracks (**33**) and (**34**), collecting the driving, clamped on the external sections of such disks (**20**), enclosed to the said driving exit shaft (**39**), as well as
- a disk-shaped body (**12**) and a circular crown (**23**), stationary and mutually adjustable in the angle direction, bearing respectively a set of slots (**24**) and (**25**), in whose cross point a bush (**22**) is strung as support for the axis (**21**) of the disks (**20**).

**2.** Change gear according to the claim **1.**, characterized by the fact that such two opposite ring tracks (**33**) and (**34**), collecting the driving, are composed of two rings associated to a cup element (**36**) keyed on such driving exit shaft (**39**), and one (**33**) of these rings is overhanging fixed on the mouth of such cup element (**36**), and the other (**34**), being received and torsionally locked in the hollow of the cup element with interposition of pushing elastic means (**37**).

**3.** Change gear according to the claim **1.**, characterized by the fact that tangentially to the said circular crown (**23**) there is a screw-nut thread device (**30, 28**) for the angle adjustment of the latter relevant to the said disk-shaped body (**12**), fixed to the casing (**1**).

**4.** Change gear according to the claim **1.**, characterized by the fact that the slots (**24**) of the set foreseen on the disk-shaped body (**12**) are equally spaced and present the rectilinear and sloped axis concordantly in comparison to the radiuses passing through their origin, while the slots (**25**) of the set foreseen on the circular crown (**23**) are distributed in the same way, but sloped oppositely.

0290400

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 202 003  (HEINTZ) <br> * Column 2; figure 1 * | 1 | F 16 H   15/22 |
| A | | 2 | |
| Y | US-A-2 216 642  (DAVIS) <br> * Pages 1,2; figures * | 1 | |
| A | | 3,4 | |
| A | US-A-2 939 345  (BURNS) <br> * Columns 2-4; figures * <br> ----- | 1-4 | |

TECHNICAL FIELDS
SEARCHED (Int. Cl.4)

F 16 H   15/00
F 16 H   17/00

The present search report has been drawn up for all claims

| Place of search | Date of completion of the search | Examiner |
|---|---|---|
| THE HAGUE | 07-07-1988 | FLORES E. |

EPO FORM 1503 03.82 (P0401)